# EUROPEAN PATENT SPECIFICATION

(11) **EP 3 637 072 B1**
(45) Date of publication and mention of the grant of the patent: **02.08.2023**
(21) Application number: 18306345.2
(22) Date of filing: 11.10.2018
(51) Int. Cl.: G01K 1/08, G01K 1/14

(54) **A TEMPERATURE SENSOR AND A METHOD FOR ASSEMBLING SUCH A TEMPERATURE SENSOR**
TEMPERATURSENSOR UND VERFAHREN ZUR MONTAGE SOLCH EINES TEMPERATURSENSORS
CAPTEUR DE TEMPÉRATURE ET PROCÉDÉ D'ASSEMBLAGE D'UN TEL CAPTEUR DE TEMPÉRATURE

(43) Date of publication of application: 15.04.2020
(73) Proprietor: MEAS France, 31027 Toulouse Cedex 3 (FR); TE Connectivity Germany GmbH, 64625 Bensheim (DE)
(72) Inventor: PECQUET, Nicolas, 77510 Doue (FR); BOUMEDDANE, Hamza, 77124 Villenoy (FR); SKURJATIN, Valentin, 67346 Speyer (DE)
(74) Representative: Grünecker Patent- und Rechtsanwälte PartG mbB

(56) References cited:
- JP-A- 2003 270 053
- JP-B2- 6 340 817
- US-A- 4 628 141
- US-A1- 2011 222 583

## Description

The present invention relates to a temperature sensor comprising a temperature sensing element for transducing a sensed temperature into an electrical output signal. The present invention further relates to a method for assembling such a temperature sensor.

The temperature sensor according to the present invention is applicable, in particular, for monitoring high temperatures. One automotive application of high temperature sensors is measuring for instance the temperature of exhaust gas.

Such temperature sensors essentially comprise a temperature sensitive element having electrically conductive leads so as to transduce the sensed temperature into the electrical output signal. The electrical output signal is output at electrically conductive leads of the temperature sensitive element which are connected to a cable, for instance a mineral insulated cable. Such mineral insulated cables comprise conductor wires enclosed in a metal outer sheath and are insulated with respect to each other inside the cable by means of mineral powders, for example. In the temperature sensors, the electrically conductive leads are connecting to the conductor wires which extend beyond the outer sheath of the cable at a terminal end thereof.

Document US 2011/0222583 A1 describes a measuring apparatus comprising a formed ceramic part provided with a first opening for the introduction of the connection line and a second opening for the introduction of the conductor element. The formed ceramic part further comprises at least one chamber section and at least one contacting opening, which opens into the chamber section and through which the connection element and the conductor element are connectable with one another, especially by laser welding.

In the automotive application environments, for instance, it is required that the temperature sensor, in particular the connection between the temperature sensing element and the cable, is robust and withstands vibrations, shocks and elevated temperatures (e.g. up to 1000°C). Consequently, such temperature sensors usually comprise an outer protective housing that is in contact with a medium to be monitored and that the space between the inner walls of the protective housing and the outer surface of the temperature sensitive element is filled with a ceramic material, such as a cement or powder.

However, there is still a need for a robust temperature sensor and for improving the electrical insulation of the conductor wires extending beyond the outer metal sheath of the cable. Indeed, there is risk of short-circuit between the conductor wires themselves extending beyond the cable as well as between the extended conductor wires and the metal sheath of the cable.

Therefore, the object of the present invention is to improve the robustness of the electrical connection in temperature sensors between the temperature sensing element leads and the cable wires, as well as to improve and simplify the electrical insulation of the conductor wires extending beyond the outer sheath of the cable.

This object is solved by the subject matter of the independent claims. Advantageous embodiments of the present invention are the subject matter of the dependent claims.

Thereby, the object of the present invention is addressed by a temperature sensor according to claim 1.

Hence, the electrically insulated element allows replacing the ceramic powder filling which is used with conventional temperature sensors. Thereby, the electrical insulation of the extended conductor wires of the cable can be achieved without any powder and fluid, which simplifies the structure and the manufacturing of the temperature sensor.

Furthermore, the electrically insulating element allows preventing short-circuit among the conductor wires extending out of the cable as well as between the conductor wires extending out of the cable and the metal sheath of the cable.

The assembly of the temperature sensing element and the cable with the electrically insulating is simplified and does not require any additional fixation means such as a bonding process.

Moreover, the connection at the junction region is mechanically secured against vibrations and shock by the electrically insulating element, which thus allows improving the robustness of the temperature sensor.

The electrically insulating element also provides support and guidance for positioning the electrically conductive leads and the conductor wires such that the junction region is located at the aperture of the electrically insulating element. Hence, the junction region can be reliably positioned with respect to the electrically insulating element. Thus, the electrically insulating element enables to improve the manufacturability of the temperature sensor.

The temperature sensor can be further improved according to various advantageous embodiments.

According to an embodiment, the electrically insulating element can have an essentially elongate cylindrical shape and can comprise the first opening at one end and the second opening at the opposite longitudinal end. Hence, the electrically insulating element has a shape easily manufacturable and is adapted to receive the temperature sensing element and the cable on each end.

According to an embodiment, the at least one aperture extends perpendicularly to the longitudinal axis of the electrically insulating element. The at least one aperture provides an access to the junction region. The fact the axis of the aperture is perpendicular to the longitudinal axis of the electrically insulating element allows providing an easy access to the junction region, without being obstructing by the temperature sensing element or cable which are nested along the longitudinal axis in the electrically insulating element.

According to an embodiment, the first opening of the electrically insulating element and which extends towards the junction region(s) can comprise one or more partition walls to insulate the conductor wires extending beyond the outer sheath of the cable with respect to each other. Hence, the one or more partition walls enable preventing a short-circuit among the conductor wires extending beyond the outer sheath of the cable without requiring any powder and fluid.

According to an embodiment, at the junction region(s), an inner surface of the electrically insulating element can comprise two or more grooves wherein the terminal ends of two or more conductor wires extending beyond the outer sheath of the cable can be positioned. Hence, in addition of guiding and holding in position the terminal ends of the conductor wires, the grooves can also be configured for electrically insulating the terminal ends of the conductor wire among each other.

According to an embodiment, at the junction region(s), the electrically conductive leads of the temperature sensing element can overlap their corresponding conductor wires extending beyond the outer sheath of the cable. Therefore, at the junction region, the electrically conductive leads to the conductor wires are positioned such that the temperature sensing element can be connected to the cable by melting and joining the electrically conductive leads to the conductor wires, by laser welding for example.

According to an embodiment, at the junction region, the connection between the temperature sensing element and the cable can be laser welded. Hence, the connection can withstand high temperatures and the connection does not require any filler or solder. Hence, laser welding is particularly well adapted for high temperature sensors.

According to an embodiment, the portion of the cable nested in the electrically insulated element can be manufactured with a geometric shape configured for preventing a rotation between the cable and the electrically insulated element by form-fit connection. Hence, by reducing the rotation of the insulating element around the cable, the form-fit connection allows reducing the abrasive forces at the nested area.

According to an embodiment, the electrically insulating element can be manufactured from a ceramic material. Ceramic material has thermal properties and performance particularly adapted for high temperature application.

According to an embodiment, the electrically insulating element can be integrally formed in one-piece. Hence, such an electrically insulating element is easily manufacturable and avoids additional steps for assembling detached parts.

According to an embodiment not covered by the claimed invention, the temperature sensor can comprise a temperature sensing element for transducing a sensed temperature into an electrical output signal and comprising one or more electrically conductive leads; a mineral insulated cable comprising two or more conductor wires enclosed by a metal outer sheath such that the two or more conductor wires are insulated with respect to each other inside the cable and wherein the two or more conductor wires extend beyond the outer sheath at a terminal end thereof with a predetermined length; the two or more electrically conductive leads of the temperature sensing element being connected to the two or more conductor wires extending beyond the outer sheath, at one or more junctions region; such that in a non-expanded state of the temperature sensor, the two or more conductor wires extending beyond the outer sheath are at least partially curved or folded in a zigzag shape; such that the predetermined length of the two or more conductor wires extending beyond the outer sheath is smaller in the non-expanded state than in an expanded state of the temperature sensor.

Hence, the connection can withstand the variation of dimension of the temperature sensor caused by thermal expansion. Indeed, the predetermined length of the extended two or more conductor wires are configured to accommodate a change in distance between the terminal end of the cable and the one or more junctions regions. Hence, the predetermined length of the two or more conductor wires provides a strain relief to the temperature sensor. As the strain relief is provided by the conductor wires themselves, there is no need for adding any part, e.g. an additional wire, to ensure the strain relief function.

The temperature sensor according to the claimed invention can be further improved according to an embodiment wherein the connection between the temperature sensing element and the cable can be realized by means of one or more intermediate wires having one end connected to each electrically conductive lead of the temperature sensing element, and another opposite end connected to the terminal end of each conductor wire extending beyond the outer sheath of the cable.

According to a further embodiment of the temperature sensor according to the claimed invention, the connection between the temperature sensing element and the cable is realized directly between each electrically conductive lead and each respective conductor wire, such that there is only one junction region between each electrically conductive lead and each respective conductor wire.

Therefore, the number of connections, and thus of junction regions, can be reduced which allows improving the robustness of the temperature sensor as the number of welding is reduced, which enhances the reliability of the connection. Furthermore, by removing the necessity of using additional and intermediate wires, the number of components of the temperature sensor can be reduced as well as the process step associated with the intermediate wires (e.g. straightening step, welding and cutting step of the intermediate wires). Therefore, the manufacturing of such a temperature sensor can be improved.

The object of the present invention is also addressed by a method for assembling a temperature sensor according to claim 13. Hence, the method allows electrically insulating the extended conductor wires of the cable among them and with the metal sheath of the cable before the step of connecting the cable to the temperature sensing element. Therefore, the connection can be realized with a reduced risk of short-circuiting the extended conductor wires.

Furthermore, the electrically insulated element allows replacing the ceramic powder filling which is used with conventional temperature sensors. Thereby, the electrical insulation of the extended conductor wires of the cable can be achieved without any powder and fluid, which simplifies the handling and the manufacturing of the temperature sensor.

Moreover, the electrically insulating element also provides support and guidance for positioning the electrically conductive leads and the conductor wires and thus allows a reliable setting at the junction region.

The connection at the junction region is also mechanically secured against vibrations and shock by the electrically insulating element, which thus allows improving further the robustness of the temperature sensor. Thus, the manufacturing of the temperature sensor can be improved.

The assembly of the temperature sensing element and the cable with the electrically insulating is simplified and does not require any additional fixation means such as a bonding process.

The method for assembling a temperature sensor can be further improved according to various advantageous embodiments.

According to an embodiment, the step d) can comprise positioning the extended two or more conductor wires in two or more grooves of an inner surface of the electrically insulating element. Hence, the grooves allow guiding and holding in position the terminal ends of the conductor wires, and can also be configured for electrically insulating the terminal ends of the conductor wires among them.

According to an embodiment, the step e) can comprise connecting the two or more electrically conductive leads to the two or more conductor wires by laser welding by directing a laser beam towards and injecting an inert gas through the aperture of the electrically insulating element extending up to the junction region. Hence, the step of laser welding for connecting the electrically conductive leads to the conductor wires can be realized with the electrically insulating element already set up. The aperture of the electrically insulating element is adapted for allowing a laser welding at the junction region.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention as defined by the appended claims.

The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
**Figure 1a** is an exploded view of a temperature sensor according to first embodiment of the present invention;
**Figure 1b** is a side view of the temperature sensor shown in Fig. 1a assembled;
**Figure 1c** is a side view of a cross-section of the electrically insulating element shown in Figures 1a and 1b;
**Figure 2a** is a top view of a first step of the method for assembling a temperature sensor according to the first embodiment of the present invention;
**Figure 2b** is a side view of a following step of the method for assembling a temperature sensor according to the first embodiment of the present invention;
**Figure 2c** is a top view of a following step of the method for assembling a temperature sensor according to the first embodiment of the present invention;
**Figure 2d** is a side view of a final step of the method for assembling a temperature sensor according to the first embodiment of the present invention;
**Figure 3a** is an exploded view of a temperature sensor in a non-expanded state according to a second embodiment of the present invention;
**Figure 3b** is a perspective view of a temperature sensor in an expanded state according to the second embodiment of the present invention;

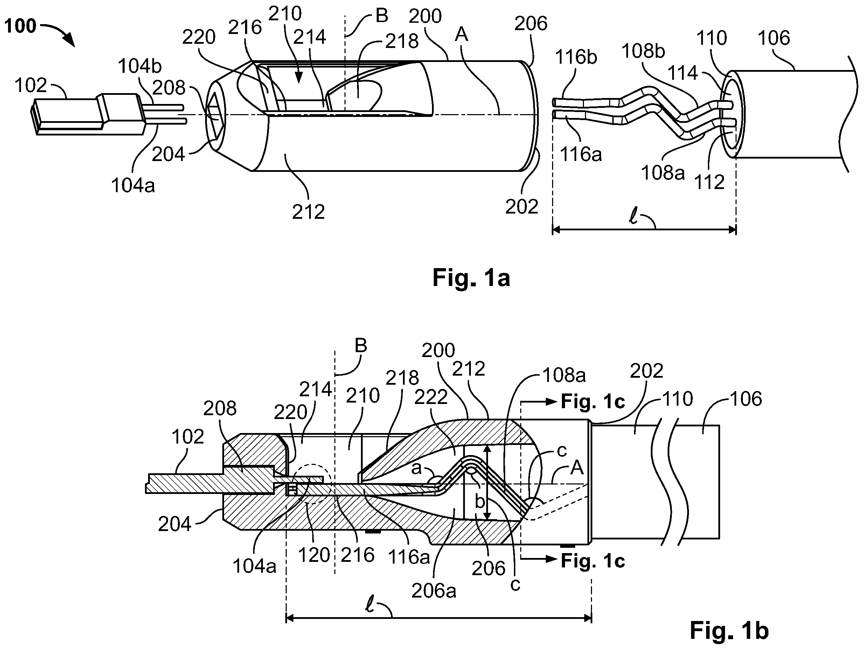

The present invention will now be explained in more detail with reference to the Figures and firstly referring to Figure 1a.

**Figure 1a** shows a perspective and exploded view of a temperature sensor 100 according to a first embodiment of the present invention.

Such a temperature sensor can for instance be used for measuring an exhaust gas temperature in an automobile.

The temperature sensor 100 comprises a temperature sensing element 102 that is operable to transduce a sensed temperature into an electrical output signal.

According to an advantageous embodiment, the temperature sensing element 102 comprises a Pt200 sensor as the actual temperature detector. Platinum sensors are particularly advantageous because of their potential accuracy and long-term stability in the high temperature range. Most platinum sensing elements are nowadays in the form of thin film resistors. However, it is clear for a person skilled in the art that any other miniaturized temperature sensing element can be used according to the present invention as well. For instance, the temperature sensing element 102 may comprise a resistive temperature detector (RTD), a thermistor or a silicon-based semi-conductor temperature sensor.

The electrical output signal is output at electrically conductive leads 104a, 104b of the temperature sensing element 102. The electrically conductive leads 104a, 104b are to be connected to a cable 106.

One automotive application of high temperature sensors is measuring for instance the temperature of exhaust gas. This means an aggressive atmosphere that might be reductive or oxidizing, contains sulfur, nitrogen, hydrogen, oxygen, and all kinds of compounds thereof. This in conjunction with the temperature determines materials for housings and fittings.

Consequently, the cable 106 is, in particular, a mineral insulated cable 106. The mineral insulated cable 106 comprises two conductor wires 108a, 108b enclosed in a metal outer sheath 110. The two conductor wires 108a, 108b are insulated with respect to each other inside the cable 106 by means of powder or packed minerals 112. The outer sheath 110 protects the internal conductor wires 108a, 108b from heat, chemical or other environmental damage. The outer sheath 110 can be of stainless steel or Inconel^{®}. The insulated packed minerals or powder 112 can be for instance made of magnesium oxide (MgO). Magnesium oxide makes an appropriate electrical insulation material because it is both chemically and physically stable at high temperatures.

At a terminal end 114 of the cable 106, the two conductor wires 108a, 108b extend beyond the outer sheath 110 thereof along a length I. In the following, the term "the extended conductor wires 108a, 108b" refers to the conductor wires 108a, 108b extension of length I.

The respective terminal end 116a, 116b of the extended two conductor wires 108a, 108b are to be connected with the electrically conductive leads 104 a, 104b of the temperature sensing element 102.

According to the first embodiment, the cable 106 comprises two conductor wires 108a, 108b to be connected with two respective electrically conductive leads 104a, 104b of the temperature sensing element 102. However, the number of conductor wires of the cable 106 as well as the number of electrically conductive leads of the temperature sensing element 102 are not limited to the number of two, and could be one and more.

According to the first embodiment of the present invention, the temperature sensor 100 further comprises an electrically insulating element 200.

The electrically insulating element 200 is made of a ceramic material and has an essentially elongate cylindrical shape along its longitudinal axis A. According to the first embodiment of the invention, the electrically insulating element 200 is integrally formed in one-piece. In a variant, the electrically insulating element can be an assembly of at least two parts.

The electrically insulating element 200 comprises at each of its longitudinal end 202, 204 a respective opening 206, 208. The first opening 206 is configured for receiving the two conductor wires 108a, 108b extending beyond the outer sheath 110 and at least partially the outer sheath of the cable 106. The second opening 208 is configured for receiving the electrically conductive leads 104a, 104b and at least partially the temperature sensing element 102. The openings 206, 208 of the electrically insulating element 200 will be described in more details with respect to the Figure 1b.

The electrically insulating element 200 also comprises an aperture 210 extending from the lateral surface 212 of the elongate electrically insulating element 200 through the inside 214 of the element 200 along an axis B perpendicular to the longitudinal axis A of the element 200. The aperture 210 extends partly inside 214 the insulating element 200 until a bottom surface 216 comprising the longitudinal axis A of the element 200. Two lateral walls 218, 220 of the aperture 210 allow partly closing the respective first opening 206 and second opening 208. While the lateral wall 220 of the aperture 210 is essentially perpendicular to the lateral surface 212 of the electrically insulating element 200, the lateral wall 218 has a gentle slope descending from the lateral surface 212 towards the bottom surface 216 of the electrically insulating element 200.

**Figure 1b** is a side view of the temperature sensor 100 shown in Figure 1a in an assembled state. Elements with the same the reference numeral already described and illustrated in Figure 1a will not be described in detail again but reference is made to their description above.

In the following, the description of the electrically conductive lead 104a and the terminal end 116a of the conductor wire 108a integrally applies to the electrically conductive lead 104b and the terminal end 116b of the conductor wire 108b, which are not visible in the side view of Figure 1b.

In the assembled state of the temperature sensor 100, the electrically conductive lead 104a of the temperature sensing element 102 is positioned such as to overlap the terminal end 116a of the conductor wire 108a of the cable 106 at a junction region 120. The connection between the temperature sensing element 102 and the cable 106 is to be realized at the junction region 120. The connection can be realized by welding, in particular by laser welding.

The junction region 120 is located inside 214 the electrically insulating element 200 and over the bottom surface 216. Hence, the aperture 210 extends up to the junction region 120. Therefore, in the assembled state, the junction region 120 is accessible from the outside of the electrically insulating element 200 by a tool and/or an operator. As a result, according to the first embodiment, the connection between the temperature sensing element 102 and the cable 106 can be realized after that the temperature sensor 100 is mechanically assembled.

According to the first embodiment, the connection between the temperature sensing element 102 and the cable 106 at the junction region 120 is realized directly between each electrically conductive lead 104a, 104b (not visible in Figure 1b) and each respective conductor wire 108a, 108b (not visible in Figure 1b). Consequently, there is only one junction region 120 and one aperture 210. Therefore, in contrast with conventional temperature sensors wherein one or more intermediate additional wires are used to connect the temperature sensing element 102 with the cable 106, the number of connections, and thus of junction regions, can be reduced. This allows improving the robustness of the temperature sensor 100 the number of welding is reduced, which enhances the reliability of the connection. Furthermore, by removing the necessity of using additional intermediate wires, the number of components of the temperature sensor 100 can be reduced as well as the process step associated with the intermediate wires (e.g. straightening step, welding and cutting step of the intermediate wires).Therefore, the manufacturing of such a temperature sensor can be improved.

However, in a variant wherein the connection between the temperature sensing element 102 and the cable 106 is realized by means of one or more intermediate wires (not represented) having one end connected to each electrically conductive lead 104a, 104b of the temperature sensing element 102, and another opposite end connected to the terminal end 116a, 116b of each conductor wire 108a, 108b extending beyond the outer sheath 110 of the cable 106, the electrically insulating element 200 would comprise more than one aperture 210, such that each junction region is accessible by a corresponding aperture through the lateral surface 212 of the electrically insulating element 200.

The shape of the openings 206, 208 is respectively adapted to the shape of the portions of the cable 106 and of the temperature sensing element 102 to be inserted at least partially into the electrically insulating element 200. Hence, the temperature sensing element 102 and the cable 106 are adapted to be partially nested and retained in the respective first 206 and second 208 openings of the electrically insulating element 200 by form fit, force fit, press fit or friction fit connection. Therefore, the assembly of the electrically insulating element 200 with the cable 106 and the temperature sensing element 202 is simple and quick without the need for any tools or fastening means.

As it can be seen on the Figure 1b, the dimension of the first opening 206, i.e. the hollow cross-section C of the first opening 206 is adapted for accommodating the zig-zag configuration of the extended two conductor wires 108a (108b is not visible but it is also folded in a zig-zag configuration). In the said zig-zag configuration, each extended conductor wires 108a, 108b is curved such that to form angles a, b, c which are different from 0° and 180° between successive portions of each extended conductor wire 108a, 108b. According to a variant, the extended conductor wire 108a, 108b can be folded only once such as to have one angle a, being different from 0° and 180°, along its predetermined length I. In another variant, the extended conductor wire 108a, 108b can be folded several times such as to have more than one angle along its predetermined length I. In another variant, each extended conductor wire 108a, 108b is folded such as to have a spring shape.

The folding of the extended conductor wires 108a, 108b is not limited to the configuration illustrated in Figure 1b, which represents an example of the said zig-zag configuration of the extended conductor wires 108a, 108b.

As the elements surrounding and/or attached to the temperature sensor 100 are made of different materials (e.g. metal, ceramic), these elements have different thermal expansion coefficients causing them not to expand in a similar manner.

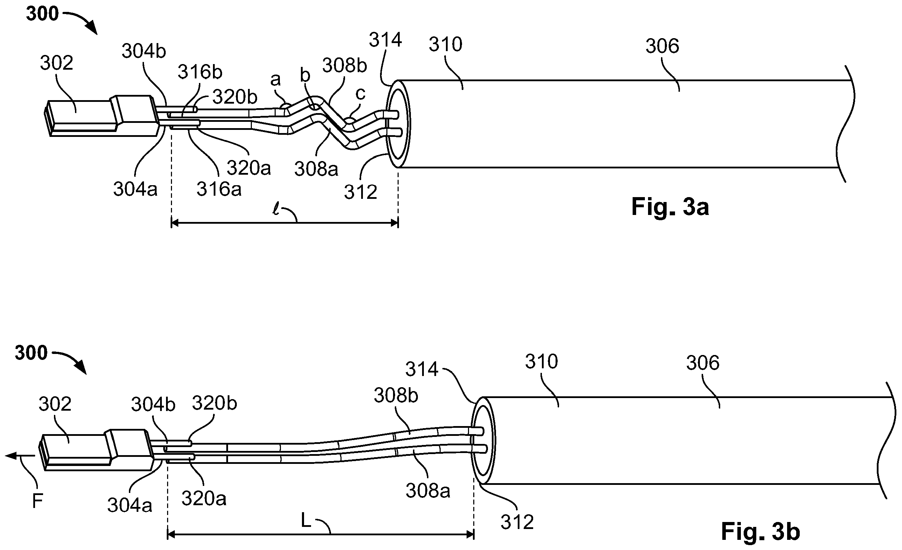

According to the first embodiment, the extended conductor wires 108a, 108b are folded a zig-zag configuration in a non-expanded state of the temperature sensor 100, such that the predetermined length I of the conductor wires 108a, 108b extending beyond the outer sheath 110 is smaller in the non-expanded state than in an expanded state of the temperature sensor 100 (see Figure 3b).Hence, the connection at the junction region 120 can withstand the variation of dimension of the temperature sensor 100 or of any elements on which the temperature sensor 100 is mounted, caused by thermal expansion. Indeed, the predetermined length I of the extended conductor wires 108a, 108b are configured to accommodate a change in distance between the terminal end 114 of the cable 106 and the junction region 120. Hence, the predetermined length I of the conductor wires 108a, 108b provides a strain relief to the temperature sensor 100. As the strain relief is provided by the conductor wires 108a, 108b themselves, there is no need for adding any part, e.g. an additional wire, to ensure the strain relief function.

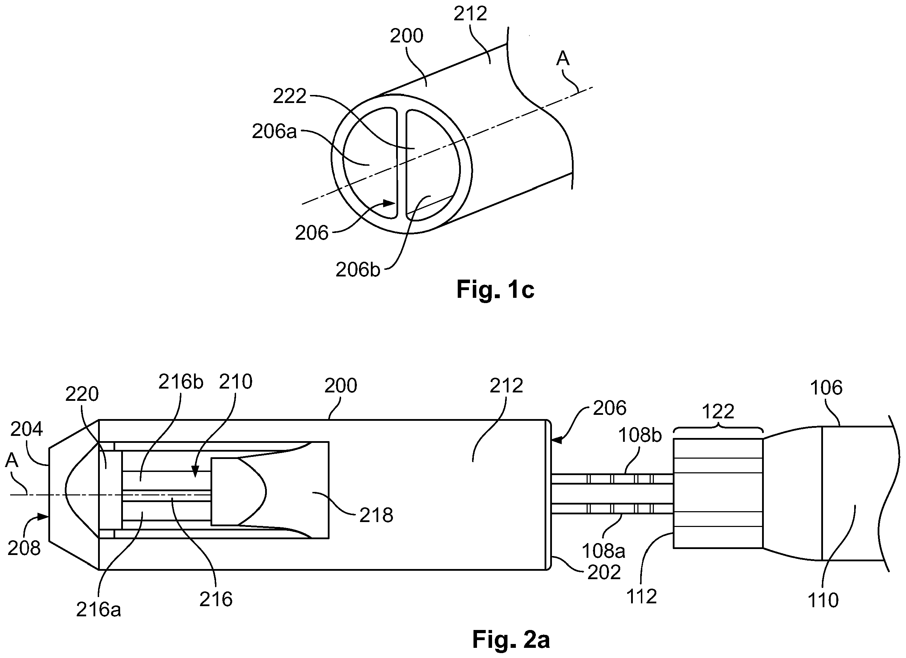

**Figure 1c** represents a side view of a cross-section of the electrically insulating element 200 shown in Figures 1a and 1b. Hence, elements with the same the reference numeral already described and illustrated in Figures 1a and 1b will not be described in detail again but reference is made to their description above.

The Figure 1c illustrates a side view of the electrically insulating element 200 viewed from its end 202 and thus showing the first opening 206 of the electrically insulating element 200. As mentioned above, the first opening 206 is configured for receiving the cable 106 and its extended conductor wires 108a, 108b (not represented in Figure 1c). The first opening 206 of the electrically insulating element 200 comprises a partition wall 222 that extends parallel to the direction of the longitudinal axis A such as to separate the hollow first opening 206 into two compartments 206a, 206b. Each of the compartments 206a, 206b is configured to accommodate each of the conductor wires 108a, 108b of the cable 106 (not represented in Figure 1c). According to the first embodiment, the partition wall 222 is formed integrally with the electrically insulating element 200 in an electrically isolative material, such as ceramic. The partition wall 222 enables preventing a short-circuit among the conductor wires 108a, 108b extending beyond the outer sheath 110 of the cable 106 without requiring any powder and fluid. Hence, the electrical insulation of the extended conductor wires 108a, 108b of the cable 106 can be achieved without any powder and fluid, used with conventional temperature sensors, which simplifies the structure and the manufacturing of the temperature sensor 100.

According to a variant (not represented in Figure 1c), the first opening 206 may be a chamfered opening at the end 202 of the electrically insulating element 200 such as to improve the fitting of the cable 106 into the first opening 206.

According to the first embodiment, the partition wall 222 does not extend until the end 202 of the electrically insulating element 200. Hence, the first opening 206 is not separated into two compartments 206a, 206b right from the end 202, but further inside the electrically insulating element 200, e.g. at the cross-section represented by the double arrows on Figure 1b. For example, the partition wall 222 does not extend in a chamfered area of the first opening 206.

In a variant wherein more than two conductor wires extends beyond the cable 106, the first opening 206 of the electrically insulating element 200 comprises a number of partition walls allowing to ensure the electrical insulation of each conductor wire to each other.

A method for assembling the temperature sensor 100 according to the first embodiment will be described in the followings with respect to the Figures 2a to 2d. Elements with the same the reference numeral already described and illustrated in Figures 1a-c will not be described in detail again but reference is made to their description above.

**Figure 2a** is a top view of a first step of the method for assembling the temperature sensor 100 according to the first embodiment of the present invention.

The cable 106 illustrates in Figure 2a is represented according to an advantageous variant, wherein the portion 122 of the cable 106 to be nested in the electrically insulating element 200 has a hexagonal cross-section. The first opening 206 having a circular cross-section, the portion 122 of the cable 106 is configured for preventing a rotation between the cable 106 and the electrically insulated element 200 by form-fit connection. As a result, the abrasive forces applied on the nested portion 122 of to cable 106 by a rotation of the cable 106 inside the opening 206 can be reduced.

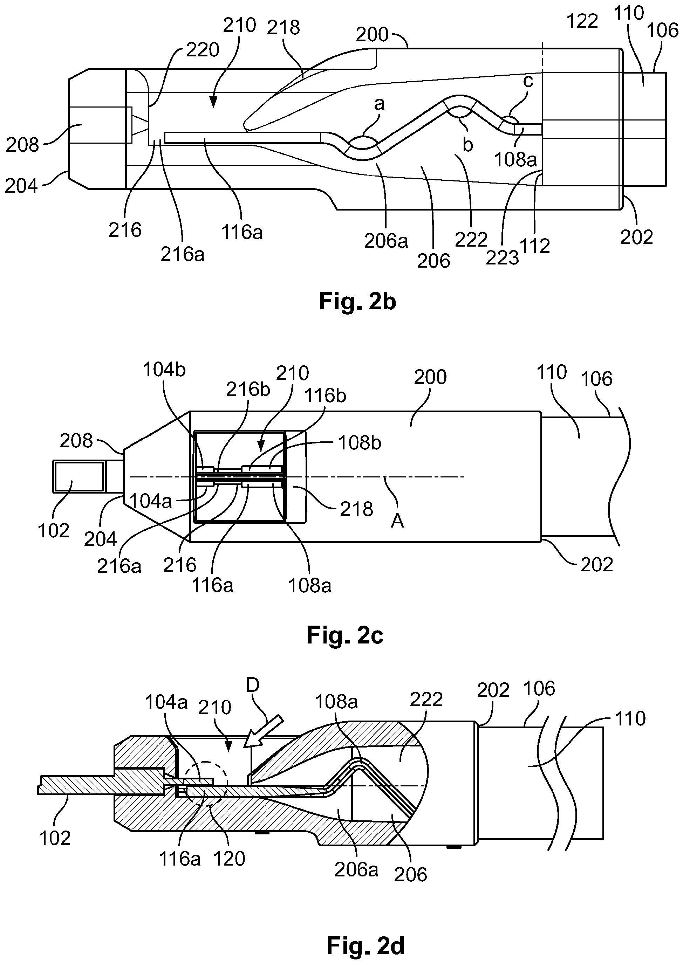

The top view of the Figure 2a allows showing, through the aperture 210, the bottom surface 216 of the electrically insulated element 200. As it can be seen in Figure 2a, the bottom surface comprises two grooves 216a, 216b whose cross-sections are adapted to the dimension of the conductor wires 108a, 108b. The grooves 216a, 216b are configured for guiding and holding in position the terminal ends 116a, 116b of the conductor wires 108a, 108b as illustrated in Figures 2b-2d. Furthermore, the grooves 216a, 216b also allow electrically insulating the terminal ends 116a, 116b of the conductor wire 108a, 108b among each other at the bottom surface 216.

At the first step of the method for assembling the temperature sensor 100, the two conductor wires 108a, 108b of the cable 106 and the cable 106 is inserted in the first opening 206 of the electrically insulating element 200.

**Figure 2b** is a side view of a second step of the method for assembling the temperature sensor 100 according to the first embodiment of the present invention.

In the following, the description of the terminal end 116a of the conductor wire 108a integrally applies to the terminal end 116b of the conductor wire 108b, which are not visible in the side view of Figure 2b.

At the step illustrated by the Figure 2b, the terminal end 116a of the conductor wire 108a is inserted in the compartment 206a of the opening 206 delimited by the partition wall 222. The terminal end 116a is moved until the bottom surface 216 of the aperture 210 of the electrically insulating element 200 and is positioned in the groove 216a. The portion of the extended conductor wire 108a folded in a zig-zag configuration is accommodated in the first opening 206 of the electrically insulating element 200. The portion 122 of the cable 106 having a hexagonal cross-section is nested in first opening 206 of the electrically insulating element 200 as far as the stop on a partition wall end 223 and hold in position by form-fit connection.

The electrically insulating element 200 and its partition wall 222 in the first opening 206 enables preventing a short-circuit among the conductor wires 108a, 108b extending beyond the outer sheath 110 of the cable 106 without requiring any powder and fluid. Hence, the electrical insulation of the extended conductor wires 108a, 108b of the cable 106 can be achieved without any powder and fluid, used with conventional temperature sensors, which simplifies the structure and the manufacturing of the temperature sensor 100.

**Figure 2c** is a side view of a third step of the method for assembling the temperature sensor 100 according to the first embodiment of the present invention.

At the step illustrated by the Figure 2c, the temperature sensing element 102 is partly inserted into the electrically insulating element 200 by the second opening 208. The temperature sensing element 102 is inserted such that its electrically conductive leads 104a, 104b overlap the terminal end 116a, 116b of the conductor wires 108a, 108b of the cable 106 - already inserted inside 214 the electrically insulating element 200 at the preceding step.

The area wherein the electrically conductive leads 104a, 104b of the temperature sensing element 102 overlap the terminal end 116a, 116b of the conductor wires 108a, 108b of the cable 106 defines the junction region 120. The connection between the temperature sensing element 102 and the cable 106 is to be realized at the junction region 120.

**Figure 2d** is a side view of a fourth step of the method for assembling the temperature sensor 100 according to the first embodiment of the present invention.

At the step represented by the Figure 2d, the electrically insulating element 200 is mechanically assembled with the temperature sensing element 102 and the cable 106 respectively by force-fit and form-fit connections. Therefore, the electrically leads 104a, 104b of the temperature sensing element 102 and the terminal end 116a, 116b of the conductor wires 108a, 108b of the cable 106 are hold in position by means of the electrically insulating element 200. Hence, the junction region 120 can be stably maintained before the connection of the electrically leads 104a, 104b with the terminal end 116a, 116b by welding, for instance.

Furthermore, as the aperture 210 extends up to the junction region 120, the junction region 120 is accessible from the outside of the electrically insulating element 200 by a tool and/or an operator.

Hence, the method according to the present invention allows to realize the connection by laser welding after the conductor wires 108a, 108b of cable 106 have been electrically insulated and once the assembly, in particular the junction region 120, is stably hold in position, both by means of the electrically insulating element 200.

At the step illustrated in Figure 2d, the connection at the junction region 120 is realized by directing a laser beam D towards the junction 120 and injecting an inert gas (not represented) through the aperture 210 of the electrically insulating element 200. Consequently, each electrically leads 104a, 104b is connected to each terminal end 116a, 116b of the conductor wires 108a, 108b at the junction region 120. The grooves 216a, 216b on the bottom surface 216 of the electrically insulating element 200 allows to separate each connections and thus to avoid any short-circuit.

In summary, the present invention according to the first embodiment allows by means of the electrically insulated element 200 replacing the ceramic powder filling which is used with conventional temperature sensors. Thereby, the electrical insulation of the extended conductor wires 108a, 108b of the cable 106 can be achieved without any powder and fluid, which simplifies the structure and the manufacturing of the temperature sensor 100.

Furthermore, the electrically insulating element 200 allows preventing short-circuit among the conductor wires 108a, 108b extending out of the cable 106 as well as between the conductor wires extending 108a, 108b out of the cable 106 and the metal sheath 110 of the cable 106.

The electrically insulating element 200 also provides support and guidance for positioning the electrically conductive leads 104a, 104b and the conductor wires 108a, 108b such that the junction region 120 is located at the aperture 210 of the electrically insulating element 200. Hence, the junction region 120 can be reliably positioned with respect to the electrically insulating element 200. Thus, the electrically insulating element enables to improve the manufacturability of the temperature sensor 100.

**The** **Figure 3a** and **the** **Figure 3b** represent a temperature sensor 300 according to a second embodiment of the present invention.

The Figure 3a represents the temperature sensor 300 in an non-expanded state, while the Figure 3b represents the temperature sensor 300 in an expanded state.

Such a temperature sensor 300 can for instance be used for measuring an exhaust gas temperature in an automobile.

The temperature sensor 300 comprises a temperature sensing element 302 that is operable to transduce a sensed temperature into an electrical output signal.

According to an advantageous embodiment, the temperature sensing element 302 comprises a Pt200 sensor as the actual temperature detector. Platinum sensors are particularly advantageous because of their potential accuracy and long-term stability in the high temperature range. Most platinum sensing elements are nowadays in the form of thin film resistors. However, it is clear for a person skilled in the art that any other miniaturized temperature sensing element can be used according to the present invention as well. For instance, the temperature sensing element 302 may comprise a resistive temperature detector (RTD), a thermistor, or a silicon-based semi-conductor temperature sensor.

The electrical output signal is output at electrically conductive leads 304a, 304b of the temperature sensing element 302. The electrically conductive leads 304a, 304b are to be connected to a cable 306.

One automotive application of high temperature sensors is measuring for instance the temperature of exhaust gas. This means an aggressive atmosphere that might be reductive or oxidizing, contains sulfur, nitrogen, hydrogen, oxygen, and all kinds of compounds thereof. This in conjunction with the temperature determines materials for housings and fittings.

Consequently, the cable 306 is, in particular, a mineral insulated cable 306. The mineral insulated cable 306 comprises two conductor wires 308a, 308b enclosed in a metal outer sheath 310. The two conductor wires 308a, 308b are insulated with respect to each other inside the cable 306 by means of powder or packed minerals 312. The outer sheath 310 protects the internal conductor wires 308a, 308b from heat, chemical or other environmental damage. The outer sheath 310 can be of stainless steel or Inconel^{®}. The insulated packed minerals or powder 312 can be for instance made of magnesium oxide (MgO). Magnesium oxide makes an appropriate electrical insulation material because it is both chemically and physically stable at high temperatures.

At a terminal end 314 of the cable 306, the two conductor wires 308a, 308b extend beyond the outer sheath 310 thereof along a length I. In the following, the term "the extended conductor wires 308a, 308b" refers to the conductor wires 308a, 308b extension of length I.

The respective terminal end 316a, 316b of the extended two conductor wires 308a, 308b are connected with the electrically conductive leads 304 a, 304b of the temperature-sensing element 302 at the respective junction regions 320a, 320b.

According to the second embodiment, the cable 306 comprises two conductor wires 308a, 308b to be connected with two respective electrically conductive leads 304a, 304b of the temperature sensing element 302. However, the number of conductor wires of the cable 306 as well as the number of electrically conductive leads of the temperature sensing element 302 are not limited to the number of two, and could be one and more.

According to an aspect of this embodiment not covered by the claimed invention, the extended conductor wires 308a, 308b are folded in a zig-zag configuration in the non-expanded state of the temperature sensor 300, as illustrated in Figure 3a. In the said zig-zag configuration, each extended conductor wires 308a, 308b is curved such that to form angles a, b, c which are different from 0° and 380° between successive portions of each extended conductor wire 308a, 308b. According to a variant, the extended conductor wire 308a, 308b can be folded only once such as to have one angle a, being different from 0° and 180°, along its predetermined length I. In another variant, the extended conductor wire 308a, 308b can be folded several times such as to have more than one angle along its predetermined length I. In another variant, each extended conductor wire 308a, 308b is folded such as to have a spring shape. Therefore, the folding of the extended conductor wires 308a, 308b is not limited to the configuration illustrated in Figure 3a, which represents an example of the said zig-zag configuration of the extended conductor wires 308a, 308b.

As the elements surrounding and/or attached to the temperature sensor 300 are made of different materials (e.g. metal, ceramic), these elements have different thermal expansion coefficients causing them not to expand in a similar manner.

Thereby, the predetermined length I of the conductor wires 308a, 308b extending beyond the outer sheath 310 of the cable is smaller in the non-expanded state than in the expanded state of the temperature sensor 300 represented in Figure 3b. In Figure 3b, in the expanded state, the length L of the extended conductor wires 308a, 308b is greater than the predetermined length I.

Hence, the connection at the junction region 320 can withstand the variation of dimension of the temperature sensor 300 or of any elements on which the temperature sensor 300 is mounted, caused by thermal expansion. For instance, the thermal expansion of a protective housing (not represented) of the temperature sensor 300, may pull the temperature sensing element 302 away from the terminal end 314 of the cable 306, as represented by the arrow F in Figure 3b. Hence, the predetermined length I of the extended conductor wires 308a, 308b are configured to accommodate a change in distance between the terminal end 314 of the cable 306 and the junction region 320. Hence, the predetermined length I of the conductor wires 308a, 308b provides a strain relief to the temperature sensor 300. As the strain relief is provided by the conductor wires 308a, 308b themselves, there is no need for adding any part, e.g. an additional wire, to ensure the strain relief function.

Furthermore, according to the second embodiment, the connection between the temperature sensing element 302 and the cable 306 at the junction regions 320a, 320b is realized directly between each electrically conductive lead 304a, 304b and each respective conductor wire 308a, 308b. Therefore, in contrast with conventional temperature sensors wherein one or more intermediate additional wires are used to connect the temperature sensing element 302 with the cable 306, the number of connections, and thus of junction regions, can be reduced. This allows improving the robustness of the temperature sensor 300 as the number of welding is reduced, which enhances the reliability of the connection. Furthermore, by removing the necessity of using additional intermediate wires, the number of components of the temperature sensor 300 can be reduced as well as the process step associated with the intermediate wires (e.g. straightening step, welding and cutting step of the intermediate wires).

In summary, the second embodiment of the present invention allows improving the manufacturing and the reliability of such a temperature sensor.

The second embodiment of the present invention can be combined with the first embodiment and/or with any of the variants described above with respect to Figures 1a-c and 2a-2d.

Although the embodiments have been described in relation to particular examples, the invention is not limited and numerous alterations to the disclosed embodiments can be made without departing from the scope of this invention. The various embodiments and examples are thus not intended to be limited to the particular forms disclosed. Rather, they include modifications and alternatives falling within the scope of the claims and individual features can be freely combined with each other to obtain further embodiments or examples according to the invention.

### Reference numbers

100: temperature sensor
102: temperature sensing element
104a, 104b: electrically conductive leads
106: cable, mineral insulated cable
108a, 108b: conductor wires
110: metal sheath
112: mineral powder
114: terminal end of the cable 106
116a, 116b: terminal ends of conductor wires
120: junction region
122: portion cable 106
200: electrically insulating element
202, 204: ends
206: first opening
206a, 206b: compartiments
208: second opening
210: aperture
212: lateral wall
214: inside
216: bottom surface
216a, 216b: grooves
218, 220: sidewalls
222: partition wall
223: partition wall end
300: temperature sensor
302: temperature sensing element
304a, 104b: electrically conductive leads
306: cable, mineral insulated cable
308a, 308b: conductor wires
310: metal sheath
312: mineral powder
314: terminal end of the cable 106
316a, 316b: terminal ends of conductor wires
320a, 320b: junction regions
A: longitudinal axis
B: aperture axis
C: cross-section first opening
a, b, c : angles
D: laser beam
F: arrow expansion
I: predetermined length
L: length in expanded state

## Claims

1. A temperature sensor (100) comprising:
a temperature sensing element (102) for transducing a sensed temperature into an electrical output signal and comprising two or more electrically conductive leads (104a-b);
a mineral insulated cable (106) comprising two or more conductor wires (108a-b) enclosed by a metal outer sheath (110) such that the two or more conductor wires (108a-b) are insulated with respect to each other inside the cable (106) and wherein the two or more conductor wires (108a-b) extend beyond the outer sheath (110) at a terminal end (114) thereof;
the two or more electrically conductive leads (104a-b) of the temperature sensing element (102) being connected to the two or more conductor wires (108a-b) extending beyond the outer sheath (110) at one or more junction regions (120);
the temperature sensor (100) further comprising an electrically insulating element (200) which is configured to electrically insulate the said extended two or more conductor wires (108a-b) at least partially with respect to each other and with respect to the metal outer sheath (110) of the cable (106);
the electrically insulating element (200) comprising a first opening (206) for receiving at least the two or more conductor wires (108a-b) extending beyond the outer sheath (110), and a second opening (208) for receiving at least partially the temperature sensing element (102); wherein each junction region (120) is located within the electrically insulating element (200);
the electrically insulating element (200) further comprising at least one aperture (210) extending up to each junction region (120), and
**characterized in that**
the cable (106) and the temperature sensing element (102) are partially nested and retained in the respective first (206) and second (208) openings of the electrically insulating element (200) by force fit, press fit or friction fit connection.

2. The temperature sensor according to claim 1, wherein the electrically insulating element (200) has an essentially elongate cylindrical shape and comprises the first opening (206) at one end (202) and the second opening (208) at the opposite longitudinal end (204).

3. The temperature sensor according to claim 2, wherein the at least one aperture (210) extends perpendicularly (B) to the longitudinal axis (A) of the electrically insulating element (200).

4. The temperature sensor according claim 2 or 3, wherein the first opening (206) of the electrically insulating element (200) and which extends towards the junction region(s) (120), comprises one or more partition walls (222) to insulate the conductor wires (108a-b) extending beyond the outer sheath (110) of the cable (106) with respect to each other.

5. The temperature sensor according to any of the preceding claims, wherein, at the junction region(s) (120), an inner surface (216) of the electrically insulating element (200) comprises two or more grooves (216a-b) wherein the terminal ends (116a-b) of two or more conductor wires (108a-b) extending beyond the outer sheath (110) of the cable (106) are positioned.

6. The temperature sensor according to any of the preceding claims, wherein at the junction region(s) (120), the electrically conductive leads (104a-b) of the temperature sensing element (102) overlap their corresponding conductor wires (108a-b) extending beyond the outer sheath (110) of the cable (106).

7. The temperature sensor according to any of the preceding claims, wherein at the junction region(s) (120), the connection between the temperature sensing element (102) and the cable (106) is laser welded.

8. The temperature sensor according to any of the preceding claims, wherein the portion (122) of the cable (106) nested in the electrically insulated element (200) is manufactured with a geometric shape configured for preventing a rotation between the cable (106) and the electrically insulated element (200) by form-fit connection.

9. The temperature sensor according to any of the preceding claims, wherein the electrically insulating element (200) is manufactured from a ceramic material.

10. The temperature sensor according to any of the preceding claims, wherein the electrically insulating element (200) is integrally formed in one-piece.

11. The temperature sensor (100, 300) according to one of the claims 1 to 10, wherein the connection between the temperature sensing (102, 302) element and the cable (106, 306) is realized by means of one or more intermediate wires
having one end connected to each electrically conductive lead of the temperature sensing element (102, 302), and
another opposite end connected to the terminal end (116a-b, 316a-b) of each conductor wire extending beyond the outer sheath (110, 310) of the cable (106, 306).

12. The temperature sensor (100, 300) according to any of the claims 1 to 10,
wherein the connection between the temperature sensing element (102, 302) and the cable (106, 306) is realized directly between each electrically conductive lead (104a-b, 304a-b) and each respective conductor wire (108a-b, 308a-b),
such that there is only one junction region (120, 320a-b) between each electrically conductive lead (104a-b, 304a-b) and each respective conductor wire (108a-b, 308a-b).

13. A method for assembling a temperature sensor (100), comprising:
a) Providing a temperature sensing element (102) for transducing a sensed temperature into an electrical output signal; the temperature sensing element (102) having two or more electrically conductive leads (104a-b);
b) Providing a mineral insulated cable (106) comprising two or more conductor wires (108a-b) enclosed by a metal outer sheath (110) such that the two or more conductor wires (108a-b) are insulated with respect to each other inside the cable (106) and wherein the two or more conductor wires (108a-b) extend beyond the outer sheath (110) at a terminal end (114) thereof;
c) Providing an electrically insulating element (200) comprising a first opening (206) and a second opening (208);
d) Inserting the cable (106) in the first opening (206) of the electrically insulating element (200) such that the two or more conductor wires (108a-b) extending beyond the outer sheath (110) are positioned inside (214) the electrically insulating element (200);
e) Inserting the temperature sensing element (102) inside the second opening (208) of the electrically insulating element (200) such that the two or more electrically conductive leads (104a-b) are positioned inside (214) the electrically insulating element (200) and are overlapping the two or more extended conductor wires (108a-b) at a junction region (120); and then
f) Connecting the two or more electrically conductive leads (104a-b) to the two or more conductor wires (108a-b) at the junction region (120) through an aperture (210) of the electrically insulating element (200) extending up to the junction region (120),
**characterized in that**
the steps d) and e) further comprise holding in position the cable (106) and the temperature sensing element (102) to the respective first (206) and second (208) openings of the electrically insulating element (200) by a force fit connection, a press fit connection, a friction fit connection and/or a form-fit connection.

14. The method for assembling a temperature sensor according to claim 13, wherein the step d) comprises positioning the extended two or more conductor wires (108a-b) in two or more grooves (216a-b) of an inner surface (216) of the electrically insulating element (200).

15. The method for assembling a temperature sensor according to claim 13 or 14, wherein the step e) comprises connecting the two or more electrically conductive leads (104a-b) to the two or more conductor wires (108a-b) by laser welding by directing a laser beam towards and injecting an inert gas through the aperture (210) of the electrically insulating element (200) extending up to the junction region (120).

## Patentansprüche

1. Temperatursensor (100), der umfasst:
ein Temperatur-Erfassungselement (102) zum Umwandeln einer erfassten Temperatur in ein elektrisches Ausgangssignal, wobei es zwei oder mehr elektrisch leitende Leitungen (104a-b) umfasst;
ein mineralisoliertes Kabel (106), das zwei oder mehr Leiterdrähte (108a-b) umfasst, die von einem Metall-Außenmantel (110) so umschlossen sind, dass die zwei oder mehr Leiterdrähte (108a-b) im Inneren des Kabels (106) in Bezug zueinander isoliert sind, und wobei sich die zwei oder mehr Leiterdrähte (108a-b) an einem Anschlussende (114) derselben über den Außenmantel (110) hinaus erstrecken;
die zwei oder mehr elektrisch leitenden Leitungen (104a-b) des Temperatur-Erfassungselementes (102) an einem oder mehreren Verbindungsbereich/en (120) mit den zwei oder mehr Leiterdrähten (108a-b) verbunden sind, die sich über den Außenmantel (110) hinaus erstrecken;
der Temperatursensor (100) des Weiteren ein elektrisch isolierendes Element (200) umfasst, das so ausgeführt ist, dass es die zwei oder mehr verlängerten Leiterdrähte (108a-b) wenigstens teilweise in Bezug zueinander und in Bezug zu dem Metall-Außenmantel (110) des Kabels (106) elektrisch isoliert;
das elektrisch isolierende Element (200) eine erste Öffnung (206) zum Aufnehmen wenigstens der zwei oder mehr Leiterdrähte (108a-b), die sich über den Außenmantel (110) hinaus erstrecken, sowie eine zweite Öffnung (208) umfasst, die das Temperatur-Erfassungselement (102) wenigstens teilweise aufnimmt; wobei sich jeder Verbindungsbereich (120) im Inneren des elektrisch isolierenden Elementes (200) befindet;
das elektrisch isolierende Element (200) des Weiteren wenigstens ein Loch (210) umfasst, das sich bis zu jedem Verbindungsbereich (120) erstreckt, und
**dadurch gekennzeichnet, dass**
das Kabel (106) und das Temperatur-Erfassungselement (102) teilweise ineinandergepasst sind und mittels Presspassungs-, Presssitz- oder Reibschluss-Verbindung in den jeweiligen ersten (206) und zweiten (208) Öffnungen des elektrisch isolierenden Elementes (200) gehalten werden.

2. Temperatursensor nach Anspruch 1, wobei das elektrisch isolierende Element (200) eine im Wesentlichen längliche zylindrische Form hat und die erste Öffnung (206) an einem Ende (202) und die zweite Öffnung (208) an dem gegenüberliegenden Längsende (204) umfasst.

3. Temperatursensor nach Anspruch 2, wobei das wenigstens eine Loch (210) senkrecht (B) zu der Längsachse (A) des elektrisch isolierenden Elementes (200) verläuft.

4. Temperatursensor nach Anspruch 2 oder 3, wobei die erste Öffnung (206) des elektrisch isolierenden Elementes (200), die sich in Richtung des/der Anschlussbereiches/-bereiche (120) erstreckt, eine oder mehrere Trennwand/Trennwände (222) umfasst, die die Leiterdrähte (108a-b), die sich über den Außenmantel (110) des Kabels (106) hinaus erstrecken, in Bezug zueinander isoliert/isolieren.

5. Temperatursensor nach einem der vorangehenden Ansprüche, wobei eine Innenfläche (216) des elektrisch isolierenden Elementes (200) an dem/den Verbindungsbereich/en (120) zwei oder mehr Nuten (216a-b) umfasst, in denen die Anschlussenden (116a-b) von zwei oder mehr Leiterdrähten (108a-b) angeordnet sind, die sich über den Außenmantel (110) des Kabels (106) hinaus erstrecken.

6. Temperatursensor nach einem der vorangehenden Ansprüche, wobei die elektrisch leitenden Leitungen (104a-b) des Temperatur-Erfassungselementes (102) an dem/den Verbindungsbereich/en (120) ihre entsprechenden Leiterdrähte (108a-b) überlappen, die sich über den Außenmantel (110) des Kabels (106) hinaus erstrecken.

7. Temperatursensor nach einem der vorangehenden Ansprüche, wobei die Verbindung zwischen dem Temperatur-Erfassungselement (102) und dem Kabel (106) an dem/den Verbindungsbereich/en (120) lasergeschweißt ist.

8. Temperatursensor nach einem der vorangehenden Ansprüche, wobei der Abschnitt (122) des Kabels (106), der in das elektrisch isolierte Element (200) eingepasst ist, mit einer geometrischen Form hergestellt ist, die so ausgeführt ist, dass eine Drehung des Kabels (106) und des elektrisch isolierten Elementes (200) durch Formschluss-Verbindung verhindert wird.

9. Temperatursensor nach einem der vorangehenden Ansprüche, wobei das elektrisch isolierende Element (200) aus einem keramischen Material hergestellt ist.

10. Temperatursensor nach einem der vorangehenden Ansprüche, wobei das elektrisch isolierende Element (200) integral aus einem Stück ausgebildet ist.

11. Temperatursensor (100, 300) nach einem der Ansprüche 1 bis 10, wobei die Verbindung zwischen dem Temperatur-Erfassungselement (102, 302) und dem Kabel (106, 306) mittels eines oder mehrerer Zwischendrahtes/Zwischendrähte realisiert ist,
dessen/deren eines Ende mit jeder elektrisch leitenden Leitung des Temperatur-Erfassungselementes (102, 302) verbunden ist, und
dessen/deren anderes, gegenüberliegendes Ende mit dem Anschlussende (116a-b, 316a-b) jedes Leiterdrahtes verbunden ist, der sich über den Außenmantel (110, 310) des Kabels (106, 306) hinaus erstreckt.

12. Temperatur-Sensor (100, 300) nach einem der Ansprüche 1 bis 10,
wobei die Verbindung zwischen dem Temperatur-Erfassungselement (102, 302) und dem Kabel (106, 306) direkt zwischen jeder elektrisch leitenden Leitung (104a-b, 304a-b) und jedem entsprechenden Leiterdraht (108a-b, 308a-b) realisiert ist,
so dass nur ein Verbindungsbereich (120, 320a-b) zwischen jeder elektrisch leitenden Leitung (104a-b, 304a-b) und jedem entsprechenden Leiterdraht (108a-b, 308a-b) vorhanden ist.

13. Verfahren zum Zusammenbauen eines Temperatursensors (100), umfassend:
a) Bereitstellen eines Temperatur-Erfassungselementes (102) zum Umwandeln einer erfassten Temperatur in ein elektrisches Ausgangssignal, wobei das Temperatur-Erfassungselement (102) zwei oder mehr elektrisch leitende Leitungen (104a-b) aufweist;
b) Bereitstellen eines mineralisolierten Kabels (106), das zwei oder mehr Leiterdrähte (100 8a-b) umfasst, die von einem Metall-Außenmantel (110) so umschlossen sind, dass die zwei oder mehr Leiterdrähte (108a-b) im Inneren des Kabels (106) in Bezug zueinander isoliert sind, und wobei sich die zwei oder mehr Leiterdrähte (108a-b) an einem Anschlussende (114) derselben über den Außenmantel (110) hinaus erstrecken;
c) Bereitstellen eines elektrisch isolierenden Elementes (200), das eine erste Öffnung (206) und eine zweite Öffnung (208) umfasst;
d) Einführen des Kabels (106) in die erste Öffnung (206) des elektrisch isolierenden Elementes (200), so dass die zwei oder mehr Leiterdrähte (108a-b), die sich über den Außenmantel (110) hinaus erstrecken, im Inneren (214) des elektrisch isolierenden Elementes (200) positioniert werden;
e) Einführen des Temperatur-Erfassungselementes (102) in das Innere der zweiten Öffnung (208) des elektrisch isolierenden Elementes (200), so dass die zwei oder mehr elektrisch leitenden Leitungen (104a-b) im Inneren (214) des elektrisch isolierenden Elementes (200) positioniert sind und die zwei oder mehr verlängerten Leiterdrähte (108a-b) in einem Verbindungsbereich (120) überlappen; sowie anschließend
f) Verbinden der zwei oder mehr elektrisch leitenden Leitungen (104a-b) mit den zwei oder mehr Leiterdrähten (108a-b) an dem Verbindungsbereich (120) über ein Loch (210) des elektrisch isolierenden Elementes (200), das sich bis zu dem Verbindungsbereich (120) erstreckt,
**dadurch gekennzeichnet, dass**
die Schritte d) und e) des Weiteren Festhalten des Kabels (106) und des Temperatur-Erfassungselementes (102) an der jeweiligen ersten (206) und zweiten (208) Öffnung des elektrisch isolierenden Elementes (200) mittels einer Presspassungs-Verbindung, einer Presssitz-Verbindung oder Reibschluss-Verbindung und/oder einer Formschluss-Verbindung umfassen.

14. Verfahren zum Zusammenbauen eines Temperatursensors nach Anspruch 13, wobei der Schritt d) Positionieren der verlängerten zwei oder mehr Leiterdrähte (108a-b) in zwei oder mehr Nuten (216a-b) einer Innenfläche (216) des elektrisch isolierenden Elementes (200) umfasst.

15. Verfahren zum Zusammenbauen eines Temperatursensors nach Anspruch 13 oder 14, wobei der Schritt e) Verbinden der zwei oder mehr elektrisch leitenden Leitungen (104a-b) mit den zwei oder mehr Leiterdrähten (108a-b) mittels Laserschweißen umfasst, bei dem ein Laserstrahl auf das Loch (210) des elektrisch isolierenden Elementes (200), das sich bis zu dem Verbindungsbereich (120) erstreckt, gerichtet und ein Inertgas über dieses eingeblasen wird.

## Revendications

1. Capteur de température (100) comprenant :
un élément de détection de température (102) pour transformer une température détectée en un signal de sortie électrique et comprenant deux ou plusieurs pattes électriquement conductrices (104a-b) ;
un câble à isolation minérale (106) comprenant deux ou plusieurs fils conducteurs (108a-b) entourés d'une gaine externe métallique (110) de telle sorte que lesdits deux ou plusieurs fils conducteurs (108a-b) sont isolés les uns par rapport aux autres à l'intérieur du câble (106), et dans lequel lesdits deux ou plusieurs fils conducteurs (108a-b) s'étendent au-delà de la gaine externe (110) à une extrémité terminale (114) de celle-ci ;
lesdites deux ou plusieurs pattes électriquement conductrices (104a-b) de l'élément de détection de température (102) étant connectées auxdits deux ou plusieurs fils conducteurs (108a-b) qui s'étendent au-delà de la gaine externe (110) dans une ou plusieurs régions de jonction (120) ;
le capteur de température (100) comprenant en outre un élément électriquement isolant (200) qui est configuré pour isoler électriquement lesdits deux ou plusieurs fils conducteurs étendus (108a-b) au moins partiellement l'un par rapport à l'autre et par rapport à la gaine externe métallique (110) du câble (106) ;
l'élément électriquement isolant (200) comprenant une première ouverture (206) pour recevoir au moins lesdits deux ou plusieurs fils conducteurs (108a-b) qui s'étendent au-delà de la gaine externe (110), et une deuxième ouverture (208) pour recevoir au moins partiellement l'élément de détection de température (102), dans lequel chaque région de jonction (120) est située à l'intérieur de l'élément électriquement isolant (200) ;
l'élément électriquement isolant (200) comprenant en outre au moins un orifice (210) qui s'étend jusqu'à chaque région de jonction (120), et
**caractérisé en ce que** le câble (106) et l'élément de détection de température (102) sont partiellement logés et retenus dans les première (206) et deuxième (208) ouvertures respectives de l'élément électriquement isolant (200) via une connexion par frettage de force, par frettage de pression ou par frettage de frottement.

2. Capteur de température selon la revendication 1, dans lequel l'élément électriquement isolant (200) présente une forme cylindrique essentiellement allongée et comprend la première ouverture (206) à une extrémité (202) et la deuxième ouverture (208) à l'extrémité longitudinalement opposée (204) .

3. Capteur de température selon la revendication 2, dans lequel ledit au moins un orifice (210) s'étend perpendiculairement (B) à l'axe longitudinal (A) de l'élément électriquement isolant (200).

4. Capteur de température selon la revendication 2 ou 3, dans lequel la première ouverture (206) de l'élément électriquement isolant (200) qui s'étend vers la ou les régions de jonction (120) comprend une ou plusieurs cloisons (222) pour isoler l'un par rapport à l'autre les fils conducteurs (108a-b) qui s'étendent au-delà de la gaine externe (110) du câble (106).

5. Capteur de température selon l'une quelconque des revendications précédentes, dans lequel, dans la ou les régions de jonction (120), une surface interne (216) de l'élément électriquement isolant (200) comprend deux ou plusieurs rainures (216a-b) dans lesquelles sont positionnées les extrémités terminales (116a-b) de deux ou plusieurs fils conducteurs (108a-b) qui s'étendent au-delà de la gaine externe (110) du câble (106).

6. Capteur de température selon l'une quelconque des revendications précédentes dans lequel, dans la ou les régions de jonction (120), les pattes électriquement conductrices (104a-b) de l'élément de détection de température (102) chevauchent leurs fils conducteurs correspondants (108a-b) qui s'étendent au-delà de la gaine externe (110) du câble (106).

7. Capteur de température selon l'une quelconque des revendications précédentes dans lequel, dans la ou les régions de jonction (120), la connexion entre l'élément de détection de température (102) et le câble (106) est soudée au laser.

8. Capteur de température selon l'une quelconque des revendications précédentes, dans lequel la portion (122) du câble (106) logée dans l'élément électriquement isolé (200) est fabriquée avec une forme géométrique configurée pour empêcher une rotation entre le câble (106) et l'élément électriquement isolé (200) via une connexion par ajustement de forme.

9. Capteur de température selon l'une quelconque des revendications précédentes, dans lequel l'élément électriquement isolant (200) est fabriqué à partir d'un matériau céramique.

10. Capteur de température selon l'une quelconque des revendications précédentes, dans lequel l'élément électriquement isolant (200) est formé intégralement en une seule pièce.

11. Capteur de température (100, 300) selon l'une des revendications 1 à 10, dans lequel la connexion entre l'élément de détection de température (102, 302) et le câble (106, 306) est réalisée au moyen d'un ou plusieurs fils intermédiaires ayant
une extrémité connectée à chaque patte électriquement conductrice de l'élément de détection de température (102, 302), et
une autre extrémité opposée connectée à l'extrémité terminale (116a-b, 316a-b) de chaque fil conducteur qui s'étend au-delà de la gaine externe (110, 310) du câble (106, 306) .

12. Capteur de température (100, 300) selon l'une quelconque des revendications 1 à 10,
dans lequel la connexion entre l'élément de détection de température (102, 302) et le câble (106, 306) est réalisée directement entre chaque patte électriquement conductrice (104a-b, 304a-b) et chaque fil conducteur respectif (108a-b, 308a-b),
de telle sorte qu'il n'y a qu'une seule région de jonction (120, 320a-b) entre chaque patte électriquement conductrice (104a-b, 304a-b) et chaque fil conducteur respectif (108a-b, 308a-b).

13. Procédé d'assemblage d'un capteur de température (100), comprenant :
a) la fourniture d'un élément de détection de température (102) pour transformer une température détectée en un signal de sortie électrique, l'élément de détection de température (102) ayant deux ou plusieurs pattes électriquement conductrices (104a-b) ;
b) la fourniture d'un câble à isolation minérale (106) comprenant deux ou plusieurs fils conducteurs (108a-b) entourés d'une gaine externe métallique (110) de telle sorte que lesdits deux ou plusieurs fils conducteurs (108a-b) sont isolés les uns par rapport aux autres à l'intérieur du câble (106) et dans lequel lesdits deux ou plusieurs fils conducteurs (108a-b) s'étendent au-delà de la gaine externe (110) à une extrémité terminale (114) de celle-ci ;
c) la fourniture d'un élément électriquement isolant (200) comprenant une première ouverture (206) et une deuxième ouverture (208) ;
d) l'insertion du câble (106) dans la première ouverture (206) de l'élément électriquement isolant (200) de telle sorte que lesdits deux ou plusieurs fils conducteurs (108a-b) qui s'étendent au-delà de la gaine externe (110) soient positionnés à l'intérieur (214) de l'élément électriquement isolant (200) ;
e) l'insertion de l'élément de détection de température (102) à l'intérieur de la deuxième ouverture (208) de l'élément électriquement isolant (200) de telle sorte que lesdites deux ou plusieurs pattes électriquement conductrices (104a-b) soient positionnées à l'intérieur (214) de l'élément électriquement isolant (200) et chevauchent lesdits deux ou plusieurs fils conducteurs étendus (108a-b) dans une région de jonction (120) ; et ensuite
f) la connexion desdites deux ou plusieurs pattes électriquement conductrices (104a-b) auxdits deux ou plusieurs fils conducteurs (108a-b) dans la région de jonction (120) à travers un orifice (210) de l'élément électriquement isolant (200) qui s'étend jusqu'à la région de jonction (120),
**caractérisé en ce que** les étapes d) et e) comprennent en outre le maintien en position du câble (106) et de l'élément de détection de température (102) par rapport aux première (206) et deuxième (208) ouvertures respectives de l'élément électriquement isolant (200) via une connexion par frettage de force, par frettage de pression, par frettage à frottement et/ou par ajustement de forme.

14. Procédé d'assemblage d'un capteur de température selon la revendication 13, dans lequel l'étape d) comprend le positionnement desdits deux ou plusieurs fils conducteurs étendus (108a-b) dans deux ou plusieurs rainures (216a-b) d'une surface interne (216) de l'élément électriquement isolant (200).

15. Procédé d'assemblage d'un capteur de température selon la revendication 13 ou 14, dans lequel l'étape e) comprend la connexion desdites deux ou plusieurs pattes électriquement conductrices (104a-b) auxdits deux ou plusieurs fils conducteurs (108a-b) par soudage au laser en dirigeant un faisceau laser vers l'orifice (210) de l'élément électriquement isolant (200) qui s'étend jusqu'à la région de jonction (120) et en y injectant un gaz inerte.
